(19) **Europäisches Patentamt European Patent Office Office européen des brevets**

(11) **EP 1 348 801 B1**

(12) **EUROPEAN PATENT SPECIFICATION**

(45) Date of publication and mention
of the grant of the patent:
**09.05.2007 Bulletin 2007/19**

(51) Int Cl.:
*D06P 3/00* (2006.01)   *D06P 3/54* (2006.01)
*D06P 3/79* (2006.01)   *D06P 1/90* (2006.01)
*B29D 11/00* (2006.01)

(21) Application number: **03005484.5**

(22) Date of filing: **17.03.2003**

(54) **Method of dyeing thermoplastic resin and colored plastic lens obtainable by that method**

Verfahren zum Färben von thermoplastischen Harzen und so hergestellte gefärbte Kunststofflinsen

Procédé de coloration de résines thermoplastiques et lentilles colorées fabriquées en résine synthétique

(84) Designated Contracting States:
**AT BE BG CH CY CZ DE DK EE ES FI FR GB GR
HU IE IT LI LU MC NL PT RO SE SI SK TR**

(30) Priority: **29.03.2002 JP 2002094258**

(43) Date of publication of application:
**01.10.2003 Bulletin 2003/40**

(73) Proprietor: **HOYA CORPORATION
Shinjyuku-ku
Tokyo, 161-8525 (JP)**

(72) Inventors:
• **Inoue, Kazuo
Shinjuyku-ku,
Tokyo 161-8525 (JP)**
• **Mishina, Misa
Shinjuyku-ku,
Tokyo 161-8525 (JP)**

• **Nakagawa, Masahiro
Shinjuyku-ku,
Tokyo 161-8525 (JP)**

(74) Representative: **Albrecht, Thomas et al
Kraus & Weisert,
Thomas-Wimmer-Ring 15
80539 München (DE)**

(56) References cited:
**GB-A- 791 392**       **US-A- 5 092 907**
**US-A- 5 509 940**

• **PATENT ABSTRACTS OF JAPAN vol. 2000, no.
12, 3 January 2001 (2001-01-03) & JP 2000 248475
A (NICCA CHEMICAL CO LTD), 12 September
2000 (2000-09-12)**
• **KOGUCHI M ET AL: "Dyeing Fibres" CHEMICAL
ABSTRACTS + INDEXES, AMERICAN CHEMICAL
SOCIETY. COLUMBUS, US, vol. 12, no. 84, 22
March 1976 (1976-03-22), page 77 XP002057390
ISSN: 0009-2258**

## Description

[Technical Field to which the Invention Belongs]

The present invention relates to a method of dyeing a thermoplastic resin plastic lens. More specifically, the invention relates to a method of dyeing a thermoplastic resin plastic lens, which can effectively dye the lens at a low temperature for a short period of time.

[Prior Art]

As the method of molding plastic lenses, there is usually employed cast polymerization or injection molding, each of which is carried out in the field of spectacle. As lenses obtained by the injection molding, ones made of, as a raw material, a polycarbonate comprising bisphenol A are known. When the polycarbonate comprising bisphenol A is used as the raw material, the manufacturing time of lenses can be shortened, and good impact resistance can be imparted. Accordingly, there have been proposed a number of thermoplastic lenses obtained by the injection molding. As the method of dyeing plastic lenses, there is generally employed dyeing with a disperse dye using water as a dispersion medium. Further, with respect to plastic lenses that are difficultly dyed with the disperse dye using water as the dispersion medium, there are proposed carrier dyeing in which trichlorobenzene or the like is added to the dyeing liquid, pressure dyeing, a method in which an organic dye is heated and sublimated in a vapor phase to achieve dyeing, and hardcoat film dyeing.

However, thermoplastic resins such as a polycarbonate comprising bisphenol A are high in hydrophobicity. Therefore, it is difficult to undergo usual dyeing with a disperse dye, particularly high-density dyeing.

Further, in the case where the above-described various conventional dyeing methods are employed for thermoplastic resin plastic lenses, there were involved the following problems.

In dyeing with a disperse dye using water as a dispersion medium, it is necessary to undergo dyeing at a relatively high temperature. Accordingly, it is difficult to apply this dyeing to thermoplastic resin plastic lenses having a low glass transition temperature.

In the carrier dyeing, thermoplastic resins are inferior in resistance to solvents to thermosetting resins. Accordingly, in carrier materials generally used in optical plastic lenses, the lens surface is invaded so that the transparency is likely lost. Further, the conventional carriers contain, as the major component, trichlorobenzene, dichlorobenzene, phenylphenol, diphenyl, methylnaphthalene, or the like. These compounds are listed as a potential substance to cause the environmental pollution or adversely affect the human bodies. Thus, when the environmental problem is taken into consideration, it is not desired to use carrier materials containing such a compound as the major component in the future.

In the pressure dyeing, the optical performance as a plastic lens is possibly lost by the pressure.

In the method in which an organic dye is heated and sublimated in a vapor phase to achieve dyeing, since thermoplastic resins are generally inferior in heat resistance, it is difficult to apply this method thereto.

In the hardcoat film dyeing, since it is difficult to contain a large amount of a dye in a hard film, it is difficult to achieve high-density dyeing. Further, in the case where the film thickness is made thick in order to contain a large amount of the dye, there are generated problems such that cracks are likely incorporated into the hardcoat film, that the lens shape becomes distorted, and that the film hardness becomes low. Moreover, there is also a problem that the light resistance is poor as compared with the case where dyeing is directly applied to a substrate.

In addition, in a method in which a dye is dissolved in a raw material of the plastic lens substrate and polymerized, the coloring density of the formed lens depends upon a thickness of the lens. For example, in concave lenses in which the central portion of the lens is thinner than the surrounding thereof, the color of the central portion becomes pale, whereas the color of the surrounding becomes deep. For this reason, there is a possibility that the color density is different in the whole of the lens. Also, in lenses of spectacles having a different diopter from each other, there is a possibility that the color density is different between the left and right lenses. Moreover, it is practically impossible to manufacture colored optical plastic lenses of a number of varieties while preparing a number of raw material liquids having a varied color tone and density depending upon the market needs.

In addition, a method in which compounds having a number of dyeing sites are added to a substrate for the purpose of improving the dyeability cannot be put into practical use because when these compounds are compounded in the substrate, the abrasion resistance and transparency of the substrate are lowered.

US 5,509,940 relates to a process for dyeing polyester fibers or nylon fibers comprising the step of contacting the fibers with an amount of a dyeing solution effective to dye the fibers, wherein the solution comprises an amount of a terpene/terpenoid solvent and a hydrophobic disperse dye, wherein the terpene/terpenoid solvent completely dissolves the hydrophobic disperse dye, and wherein the terpene/terpenoid solvent is one or more terpene hydrocarbons, one or more terpenoid hydrocarbons, or a mixture of one or more terpene hydrocarbons with one or more terpenoid hydrocarbons

JP 2000 248475 relates to a dye carrier and to low-temperature dyeing of polyester fibers. According to this reference, a monocyclic monoterpene hydrocarbon, for example, terpinene, phellandrene, limonene is dispersed or emulsified in the dye bath for polyester fibers as a carrier, in an amount of 2-20 wt.%, preferably 4-15 wt.% based on the weight of the fiber to be dyed and the polyester fiber fabric is dyed at 90-110, preferably 103-110°C for 30-60 minutes.

[Problems that the Invention is to Solve]

Under these circumstances, an object of the invention is to provide a method of dyeing a thermoplastic resin plastic lens capable of effectively dyeing a thermoplastic resin plastic lens containing a polycarbonate resin comprising bisphenol A, which is difficultly dyed by the conventional dyeing methods, or capable of effectively dyeing a thermoplastic resin plastic lens containing a polyester resin, which can be dyed by the conventional dyeing methods, at a lower temperature for a short period of time.

[Means for Solving the Problems]

In order to achieve the above-described object, the present inventors made extensive and intensive investigations. As a result, it has been found that the object can be achieved by a method of dyeing a thermoplastic resin plastic lens, which comprises dipping the thermoplastic resin plastic lens in a dyeing liquid containing a disperse dye and a monocyclic monoterpene.

[Mode for Carrying Out the Invention]

As the thermoplastic resin plastic lens, any of plastic lenses made of a raw material that can be subjected to injection molding can be used. For example, plastic lenses containing a thermoplastic resin that is difficultly dyed by the conventional dyeing means, such as polycarbonate resins and polyolefin resins; plastic lenses containing a thermoplastic resin that is dyeable by the conventional dyeing means, such as polyester resins; and lenses containing a raw material comprising at least one member selected from polymer alloys comprising the foregoing resins, can be used.

As the polycarbonate resins, any resins that can be used for lenses can be used without particular limitations. Examples include polymers or copolymers obtained by the phosgene process for reacting a varied dihydroxydiaryl compound with phosgene, or the ester exchange process for reacting a dihydroxydiaryl compound with a carboxylic ester such as diphenyl carbonate. Representative examples include polycarbonate resins produced by using 2,2-bis(4-hydroxyphenyl) propane (bisphenol A) as the dihydroxydiaryl compound.

As the polyolefin resins, any resins that can be used for lenses can be used without particular limitations. Examples include cycloolefin polymers (such as ZEONOR, a trade name manufactured by Zeon Corporation; ARTON, a trade name manufactured by JSR Corporation; and TOPAS, a trade name manufactured by Mitsui Chemicals, Inc.).

As the polyester resins, any resins that can be used for lenses can be used without particular limitations. Examples include glycol-modified polyethylene telephthalates (such as EASTAR DN003, manufactured by Eastman Chemical Company).

As the polymer alloys, there are commercially available alloys of a polycarbonate resin and a polyolefin resin, alloys of a polyolefin resin and the foregoing polyester resin, and alloys of a polycarbonate resin and a polyester resin. Examples include XYLEX (a trade name manufactured by GE Plastics Japan) and EASTALLOY DA003 (a trade name manufactured by Eastman Chemical Company).

In the method according to the invention, a disperse dye is used as the dye. While the disperse dye is sparingly soluble in water, it is partially dissolved and dispersed into the inside of the lens, whereby the plastic lens is dyed. Examples of this type include azo-based dyes, anthraquinone-based dyes, and nitroallylamine-based dyes. The azo-based and nitroallylamine-based dyes are mainly of a yellow, orange, or red system, and the anthraquinone-based dyes are chiefly of a blue or violet system.

Representative examples of the disperse dye to be used in the method according to the invention are those enumerated below.

(1) Blue dyes: Dianix Blue AC-E, Dianix Blue RNE (C.I. Disperse Blue 91), Dianix Blue GRE (C.I. Disperse Blue 81), Sumikaron Blue E-R (C.I. Disperse Blue 91), Kayalon Polyester Blue GR-E (C.I. Disperse Blue 81)

(2) Red dyes: Dianix Red AC-E, Diacelliton Fast Red R (C.I. Disperse Red 17), Diacelliton Fast Scarlet R (C.I. Disperse Red 7), Diacelliton Fast Pink R (C.I. Disperse Red 4), Sumikaron Rubine SE-RPD, Kayalon Polyester Rubine GL-SE200 (C.I. Disperse Red 73)

(3) Yellow dyes: Dianix Yellow AC-E, Dianix Yellow YL-SE (C.I. Disperse Yellow 42), Sumikaron Yellow SE-RPD, Diacelliton Fast Yellow GL (C.I. Disperse Yellow 33), Kayalon Fast Yellow GL (C.I. Disperse Yellow 33), Kayalon Microester Yellow AQ-LE

(4) Orange dyes: Dianix Orange B-SE200 (C.I. Disperse Orange 13), Diacelliton Fast Orange GL (C.I. Disperse Orange 3), Miketon Polyester Orange B (C.I. Disperse Orange 13), Sumikaron Orange SE-RPD, Sumikaron Orange SE-B (C.I. Disperse Orange 13)

(5) Violet dyes: Dianix Violet 5R-SE (C.I. Disperse Violet 56), Sumikaron Violet E-2RL (C.I. Disperse Violet 28)

In the method according to the invention, examples of the monocyclic monoterpene that is used together with the disperse dye include limonene, menthol, terpinene, phellandrene, sylvestrene, pinene, and terpineol. Commercially available water-soluble cleaning agents such as ones containing limonene may be used. Further, the monocyclic monoterpene may be emulsified using an anionic surfactant such as alkylbenzenesulfonates, alkylnaphthalenesulfonates, alkylsulfosuccinates, aromatic sulfonic acid-formalin condensates, and lauryl sulfonates, or a nonionic surfactant such as polyoxyethylalkyl ethers, alkylamine ethers, and polyoxyethylene sorbitan fatty acid esters, and dispersed in a dyeing bath.

In the method according to the invention, the ratio of the disperse dye to the monocyclic monoterpene to be used in the dyeing liquid is not particularly limited but may be properly chosen depending on the kinds of the plastic lens to be dyed and the disperse dye.

The amount of the disperse dye to be added in the dyeing liquid is not particularly limited. However, from the standpoint of practical use, it is preferably from 0.1 to 5 % by weight, and more preferably from 0.3 to 0.5 % by weight on a basis of the whole amount of the dyeing liquid.

The amount of the monocyclic monoterpene to be added in the dyeing liquid is not particularly limited. However, from the standpoint of practical use, it is preferably from 0.001 to 1 % by weight, and more preferably from 0.01 to 0.5 % by weight on a basis of the whole amount of the dyeing liquid.

Further, in the case of half-dyeing, there is a possibility that during moving the lens up and down at the time of dyeing, the dye attaches to the lens surface, dries and adheres thereto. In this case, in order to prevent the adhesion of the dye, a large quantity of the surfactant may be added to the dyeing liquid by entire dyeing. By this, it is considered that the emulsification state of the monocyclic monoterpene becomes good, thereby preventing the dye from adhesion to the lens. The surfactant is not particularly limited, but conventionally known ones may be used. In particular, those having a polyoxyethylene structure are preferable.

The weight of the surfactant to be added in the dyeing liquid during the half-dyeing is not particularly limited but is preferably from 1.1 to 2 times that in the entire dyeing.

In dyeing the thermoplastic resin plastic lens by the method according to the invention, a dye dispersion bath is first prepared. In the dye dispersion bath, predetermined amounts of the disperse dye and the monocyclic monoterpene are added in, for example, water such that the dye density becomes from 0.1 % to 5 % by weight. In addition, if desired, a known dispersing agent that is customarily used in the conventional dyeing with a disperse dye can be properly added. Next, the thus prepared dye dispersion bath is heated at from 70 to 100 °C, and the optical thermoplastic resin plastic lens is dipped in the bath for an arbitrary period of time. There is thus obtained effectively the desired colored optical thermoplastic resin plastic lens. The dyeing time is preferably in the range of from one minute to 2 hours.

The thus obtained colored plastic lens according to the invention is useful for, for example, spectacle lenses, camera lenses, projector lenses, telescope lenses, and magnifying lenses.

[Examples]

Next, the invention will be described below with reference to the Examples, but it should not be construed that the invention is limited thereto.

Incidentally, the dyeing density described in the Examples was calculated according to the following equation.

$$[\text{Dyeing density (\%)}] = 100 - [\text{Transmittance (\%)}]$$

Example 1:

In a dyeing tank having a mixture of 100 parts by weight of pure water and 3.52 parts by weight of BPI Violet (a dye manufactured by Brain Power Incorporated) as a dye was added and mixed 0.24 parts by weight of a surfactant-containing limonene aqueous solution of ORANGE CLEANER 18 (a limonene-containing cleaning agent manufactured by Yasuhara Chemical Co., Ltd.). A polycarbonate resin (PANLITE, a trade name for polycarbonate resin comprising bisphenol A, manufactured by Teijin Limited) was used as a thermoplastic resin plastic lens. Dyeing of the lens was carried out by dipping at a dyeing bath temperature of 90 °C for 4 minutes. A dyeing density was measured from a light transmittance of 525 nm. As a result, the dyeing density was found to be 50 %. Further, dyeing was carried out under the same condition except for changing the dyeing time to 10 minutes. As a result, the dyeing density was found to be 74 %. Incidentally, the dyeing density of the lens of 525 nm before dipping in the dyeing tank was 9 %.

Comparative Example 1:

Dyeing of a thermoplastic resin plastic lens was carried out in the same manner as in Example 1, except that the surfactant-containing limonene aqueous solution was not used. A dyeing density of the lens was measured from a light transmittance of 525 nm. As a result, the dyeing density was found to be 9.5 %. Since the dyeing density of the lens of 525 nm before dipping in the dyeing tank was 9 %, it could be understood that the lens was not substantially dyed.

Comparative Example 2:

Dyeing of a thermoplastic resin plastic lens was carried out in the same manner as in Example 1, except that the 0.08 parts by weight of MERRIER TW (manufactured by Meisei Chemical Works, Ltd.) as a phthalimide/diethyl phthalate-containing carrier was added in place of the surfactant-containing limonene aqueous solution. In the dyed lens, the lens surface was broken, and the transparency was lost.

Comparative Example 3:

Dyeing of a thermoplastic resin plastic lens was carried out in the same manner as in Example 1, except that 0.08 parts by weight of TERYL CARRIER PE-550 (manufactured by Meisei Chemical Works, Ltd.) as a dichlorobenzene/trichlorobenzene-containing carrier was added in place of the surfactant-containing limonene aqueous solution. In the dyed lens, the lens surface was broken, and the transparency was lost.

Example 2:

To 0.08 parts by weight of ORANGE CLEANER 18 (a limonene-containing cleaning agent manufactured Yasuhara Chemical Co., Ltd.) were added 0.01 parts by weight of NEOPELEX G-15 (soft type sodium dodecylbenzenesulfonate as an anionic surfactant, manufactured by Kao Corporation) and 0.02 parts by weight of NEWCOL 1500 (polyoxyethylene castor oil ether as a nonionic surfactant, manufactured by Nippon Nyukazai Co., Ltd.), to prepare a surfactant-containing monocyclic monoterpene aqueous solution. The thus prepared solution was added in a dyeing tank having a mixture of 100 parts by weight of pure water and 3.52 parts by weight of BPI Violet (a dye manufactured by Brain Power Incorporated) as a dye. A polycarbonate resin (PANLITE, a trade name for polycarbonate resin comprising bisphenol A, manufactured by Teijin Limited) was used as a thermoplastic resin plastic lens. The lens was subjected to gradient dyeing at a dyeing bath temperature of 90 °C for 10 minutes. As a result, the lens could be dyed in a clear gradient state without invading the lens surface. A dyeing density of the central portion of the lens was measured from a light transmittance of 525 nm. As a result, the dyeing density was found to be 25 %.

Example 3:

0.6 parts by weight of α-pinene (manufactured by Yasuhara Chemical Co., Ltd.) was mixed with 0.16 parts by weight of PELEX OT-P (a sulfosuccinic acid type anionic surfactant, manufactured by Kao Corporation), 0.16 parts by weight of EMULGEN A-90 (a polyoxyethylene derivative, manufacture by Kao Corporation) and 0.16 parts by weight of NEWCOL 1545 (polyoxyethylene castor oil ether, manufactured by Sanyo Chemical Industries, Ltd.), and the mixture was stirred. The mixed liquid was added in a dyeing tank having a mixture of 100 parts by weight of pure water and 3.52 parts by weight of BPI Violet (a dye manufactured by Brain Power Incorporated) as a dye, to prepare a dyeing liquid. A polycarbonate resin (PANLITE, a trade name for polycarbonate resin comprising bisphenol A, manufactured by Teijin Limited) was used as a thermoplastic resin plastic lens. The lens was dyed at a dyeing bath temperature of 90 °C for 10 minutes. As a result, the lens could be dyed without invading the lens surface. A dyeing density of the lens was measured from a light transmittance of 525 nm. As a result, the dyeing density was found to be 27 %.

Example 4:

Dyeing was carried out in the same manner as in Example 3, except for changing the α-pinene to α-terpineol.

A dyeing density of the lens was measured from a light transmittance of 525 nm. As a result, the dyeing density was found to be 25 %.

Example 5:

In Example 1, XYLEX (manufactured by GE Plastics Japan) that was commercially available as a polymer alloy of a polycarbonate resin and a polyester resin was used in place of the polycarbonate resin as the thermoplastic resin plastic lens. Further, BPI Blue (a dye manufactured by Brain Power Incorporated) was used as the dye in place of the BPI Violet (a dye manufactured by Brain Power Incorporated), the dyeing bath temperature was set at 70 °C, and dyeing was carried out under the same condition as in Example 1. A dyeing density of the lens was measured from a light transmittance of 585 nm. As a result, the dyeing density was found to be 30 %.

Comparative Example 4:

Dyeing of a thermoplastic resin plastic lens was carried out in the same manner as in Example 5, except that the surfactant-containing limonene aqueous solution was not used. As a result, the lens was not dyed at all.

[Advantage of the Invention]

According to the method of the invention, during dyeing a thermoplastic resin plastic lens, a hardly dyeable thermoplastic resin optical plastic lens can be dyed in arbitrary color tone and density with extremely good efficiency at a low temperature for a short period of time by using a disperse dye and a monocyclic monoterpene. Thus, colored plastic lenses suitable as spectacle lenses to which fashionability is attached importance can be cheaply manufactured. Further, since the monocyclic monoterpene has good biodegradation properties, there is no fear on environmental pollution and adverse influences to human bodies.

**Claims**

1.  A method of dyeing a thermoplastic resin plastic lens, which comprises dipping a thermoplastic resin plastic lens in a dyeing liquid containing a disperse dye and a monocyclic monoterpene.

2.  The method according to claim 1, wherein the thermoplastic resin is a resin containing a raw material comprising at least one member selected from a polycarbonate resin, a polyolefin resin, a polyester resin, and polymer alloys comprising these resins.

3.  The method according to claim 1 or 2, wherein the thermoplastic resin contains a polycarbonate resin comprising bisphenol A as the raw material.

4.  The method according to any one of claims 1 to 3, wherein the monocyclic monoterpene is at least one member selected from limonene, menthol, terpinene, phellandrene, sylvestrene, pinene, and terpineol.

5.  The method according to any one of claims 1 to 4, wherein the amount of the monocyclic monoterpene is from 0.001 to 1% by weight on the basis of the whole amount of the dyeing liquid.

6.  The method according to any one of claims 1 to 5, wherein a surfactant is added to the dyeing liquid to emulsify the monocyclic monoterpene.

7.  The method according to claim 6, wherein the surfactant is a surfactant having a polyoxyethylene structure.

**Patentansprüche**

1.  Verfahren zum Färben von Kunststofflinsen aus einem thermoplastischen Harz, umfassend das Eintauchen der Kunststofflinsen aus einem thermoplastischen Harz in eine Färbungsflüssigkeit, die einen Dispersionsfarbstoff und ein monocyclisches Monoterpen enthält.

2.  Verfahren nach Anspruch 1, wobei das thermoplastische Harz ein Harz ist, enthaltend ein Ausgangsmaterial, umfassend mindestens ein Mitglied, ausgewählt aus Polycarbonatharzen, Polyolefinharzen, Polyesterharzen und Polymerlegierungen, die diese Harze umfassen.

3. Verfahren nach Anspruch 1 oder 2, wobei das thermoplastische Harz ein Polycarbonatharz, umfassend Bisphenol A als Ausgangsmaterial, enthält.

4. Verfahren nach einem der Ansprüche 1 bis 3, wobei das monocyclische Monoterpen mindestens ein Mitglied, ausgewählt aus Limonen, Menthol, Terpinen, Phellandren, Sylvestren, Pinen und Terpineol, ist.

5. Verfahren nach einem der Ansprüche 1 bis 4, wobei die Menge des monocyclischen Monoterpens 0,001 bis 1 Gew.-%, bezogen auf die gesamte Menge der Färbungsflüssigkeit, ist.

6. Verfahren nach einem der Ansprüche 1 bis 5, wobei ein Tensid zu der Farbungsflüssigkeit zugesetzt wird, um das monocyclische Monoterpen zu emulgieren.

7. Verfahren nach Anspruch 6, wobei das Tensid ein Tensid ist, das eine Polyoxyethylen-Struktur hat.

**Revendications**

1. Procédé de coloration de lentilles organiques en résine thermoplastique qui comprend l'immersion d'une lentille organique en résine thermoplastique dans un liquide colorant contenant un colorant dispersé et un monoterpène monocyclique.

2. Procédé selon la revendication 1, dans lequel la résine thermoplastique est une résine contenant une matière première comprenant au moins un élément sélectionné parmi une résine de polycarbonate, une résine de polyoléfine, une résine de polyester et des alliages polymères comprenant ces résines.

3. Procédé selon la revendication 1 ou 2, dans lequel la résine thermoplastique contient une résine de polycarbonate comprenant du bisphénol A en tant que matière première.

4. Procédé selon l'une quelconque des revendications 1 à 3, dans lequel le monoterpène monocyclique est au moins un élément sélectionné parmi le limonène, le menthol, le terpinène, le phellandrène, le sylvestrène, le pinène et le terpinéol.

5. Procédé selon l'une quelconque des revendications 1 à 4, dans lequel la quantité de monoterpène monocyclique est de 0,001 à 1 % en poids sur la base de la quantité totale de liquide colorant.

6. Procédé selon l'une quelconque des revendications 1 à 5, dans lequel un tensioactif est ajouté au liquide colorant afin d'émulsifier le monoterpène monocyclique.

7. Procédé selon la revendication 6, dans lequel le tensioactif est un tensioactif ayant une structure de polyoxyéthylène.